# EUROPEAN PATENT APPLICATION

(11) **EP 1 806 691 A1**
(43) Date of publication of application: **11.07.2007**
(21) Application number: 06100218.4
(22) Date of filing: 10.01.2006
(51) Int. Cl.: G06Q 10/00

(54) **System and Method of Inventory Management**

(71) Applicant: Tesco Stores Ltd., Cheshunt EN8 9SL (GB)
(72) Inventor: Johnson, Malcolm, Cheshunt EN8 9SL (GB); Mayhew, Martyn, Cheshunt EN8 9SL (GB); Russell, Gary, Worthing BN11 2AY (GB)
(74) Representative: McCann, Heather Alison

(57) **Abstract**

Embodiments of the invention are concerned with a method of conducting inventory management for products held in at least two different storage areas, including first and second storage areas; these two storage areas might be a shop floor storage area (2a) and a stock control area (2b). The method involves the steps of:
maintaining an inventory database (17) for holding product records (R₁...Rₙ), said product records including an item count for each of a plurality of different products;
conducting a first stage inventory management process (201) relating to said first area (2a) and a second stage inventory management process (203) relating to said second area (2b).

The first stage comprises the steps of:
receiving a first stage data input identifying a first product and indicating that a number of items of said first product held in said first storage area is at or below a first predetermined number;
in response to receiving said first stage data input identifying said first product (S3.1), generating a data output for use in said second stage (S3.7), said first stage data output including identifying data for said first product;
and the second stage comprises the steps of:
receiving a second stage data input (S4.1) relating to said first stage data output;
determining from said second stage data input whether at least a second predetermined number of items of said first product is present in said second storage area;
conducting a first inventory control process (S4.4) in dependence on whether at least said second predetermined number of items of said first product is present in said second storage area.

## Description

### Field of the Invention

The present invention relates to a system for, and a method of, inventory management, and is particularly, but not exclusively, suitable for monitoring and tracking stock levels.

### Background of the Invention

Supply chain management is complex: it relies on the coordination of information and products from many disparate sources arriving at different times and from different locations. Inventory management (that is to say monitoring the amount, location and status of goods) in particular is dependent on a number of different inputs; as will be appreciated, as the number of different inputs increases, the level of complexity and potential for error increases commensurately.

In retail environments, where either being out of stock or having too much stock presents significant, albeit different, problems for the retailer, there is considerable impetus to identify and utilise technical means that enable more efficient stock management. More specifically there is a need to better coordinate inputs from retail outposts (i.e. where goods are actually sold) with supplier data.

The most common method of gathering such inputs from retail outposts relies largely (if not entirely) on human estimates. Using a handheld mobile device with integrated bar code scanner (e.g. a PDA), the designated person walks the store isles, identifying empty shelves and scanning the associated bar code labels. Once the entire store has been reviewed, the mobile device is connected - via a wireless or wired network - to a centralised processing centre, typically via an intermediate computing system that is local to the retail outpost. The designated person can then check the stock room of the retail outpost - checking for items that could be moved onto empty shelves. In the event that there are no such items the designated person can pass this information onto the centralised processing centre, via the mobile device and local computing system.

It will be appreciated that this method is subject to many problems: the entire process can take 3-4 hours if done correctly (and longer if the retail outpost is particularly large), and typically the data are batch-processed for transmission to the local computing system. In relation to the latter, an entire batch of data can be lost in the event of failure of either or both of the mobile device or local computing system. Furthermore, in order for the designated person to continue with the scanning process, the mobile device has to wait for the processing schedule of the local computing system to coincide with the transmission request from the mobile device, which can significantly delay the scanning process and/or cause the designated person to lose concentration - in particular where they are in relation to scanning items within the store. In addition and as will be appreciated, the method relies on the designated person to correctly identify and count items within the retail outpost, something that has been shown to be subject to significant error.

In relation to ordering goods for delivery to a retail outpost, the centralised processing system typically relies on data indicative of expected sales figures, which are either generated manually (by someone at the retail outpost) or makes use of technology that learns from past experience to help improve the accuracy of human-driven ordering. In the former case this is an educated guessing game that relies entirely on the experience of one person. In the case of the latter, this "past experience" is dependent on actual sales data generated when goods are bought by customers from the retail outpost: US patent applications having publication numbers US2003036985 and US20050182696 each describe systems in which, when a product is scanned at the checkout, the sale of the item is then transmitted to a central computer where the inventory of that product is adjusted accordingly.

There are several problems associated with updating product inventory based on these systems alone: firstly, errors often occur during the simple process of scanning items at the checkout counter. For example, when scanning through a lemon yoghurt and a plain yoghurt, the clerk may erroneously scan the lemon yoghurt twice instead of scanning each item separately; similarly if a customer buys a 2-liter bottle of Coke, a 2-liter bottle of Pepsi and a 2-liter bottle of Dr Pepper, and the clerk scans only one and multiplies it by three, the item-level inventory in respect of each of these products will be erroneous because it will appear that three bottles of one of the items were purchased instead of three separate items. Secondly these methods do not account for misplaced items or theft of items from within the store.

Other solutions, such as that described in WO9009638, make use of complex predictive systems in which, for each of a number of different items or products, inventory data include a specified period, a retail opening time and a retail closing time for each day within the specified period, and historical inventory data for the specified period. The historical inventory data include a movement value, a customer service level, a proportion of business done for each day within the study period, and a variability of demand, and the system attempts to predict demand and optimise delivery of items or products to meet that demand. It will be appreciated that the system is complex and requires accurate estimation of several parameters in order to generate reliable (i.e. useful) data.

A further problem with each of these systems is that they do not deal with the detail of how to identify current, or real-time, availability of items. It will therefore be appreciated that there is a need for a less complex system that is able to provide real-time product availability for managing product inventories.

### Summary of the Invention

In view of the aforementioned complications associated with relying on counting and batch-transmitting items to a processing system and/or accurate scanning of items at the point of sale to track product availability, the inventors of the present invention have taken a rather different approach to that adopted in the prior art: the inventors have instead developed a system that monitors the presence of items, transmitting and processing data indicative of the monitored presence on a per item basis.

Accordingly, in accordance with an aspect of the present invention, there is provided a method of conducting inventory management for products held in at least two different storage areas, including first and second storage areas, comprising:
maintaining an inventory database for holding product records, said product records including an item count for each of a plurality of different products;
conducting a first stage inventory management process relating to said first area and a second stage inventory management process relating to said second area,
   in said first stage:
   receiving a first stage data input identifying a first product and indicating that a number of items of said first product held in said first storage area is at or below a first predetermined number;
   in response to receiving said first stage data input identifying said first product, generating a data output for use in said second stage, said first stage data output including identifying data for said first product; and
   in said second stage:
      receiving a second stage data input relating to said first stage data output;
      determining from said second stage data input whether at least a second predetermined number of items of said first product is present in said second storage area;
      conducting a first inventory control process in dependence on whether at least said second predetermined number of items of said first product is present in said second storage area.

In embodiments of the invention, inventory management is performed on the basis of the presence or not of stock, rather than the numbers of stock; thus in preferred embodiments of the invention, the first predetermined number is zero and the second predetermined number is one. Preferably the data output generated in the first stage is an output that indicates whether or not items corresponding to the first product are expected to be present in the second storage area, and the second stage then essentially involves validating whether or not such items are actually present in the second storage area.

Embodiments of the invention are particularly well suited for use with retail outposts in which the first storage area is a shopping area (in which customers can select items of the first product from shelves or the like) and where the second storage area is a stock room (which is inaccessible to customers and receives items of first products from distributors). In such retail outposts, the output of the first stage - which in one example involves obtaining data in relation to the lack of the first product on shelves - is used to trigger a process for identifying whether or not items of the first product are expected to be located in the stock room.

Preferably the first product data are received by means of scanning product code identifiers located on product items and/or shelf regions. Scanning can be performed e.g. using bar code scanners or RF identification code scanners, depending on the type of code associated with a given product item. These scanners can be embodied in a PDA or similar hand-held device, as is common in the art. Since embodiments of the invention do not require numbers of product items to be manually counted this entirely eliminates what is generally accepted to be a significant source of error from the process of inventory management.

In preferred arrangements the inventory management process in relation to the first area (e.g. the customer facing retail area) includes receiving a further first stage data input relating to a second, different product. Once received, a second product relating to the further first stage input is identified, as is whether or not a number of items of said second product held in said first storage area is at or below a predetermined threshold. The output of this determination step is then input to the second stage process.

Thus presence data relating to individual products are transmitted on a per product basis (first product, then second product), which means that, at worse, the system suffers a loss of data relating to one product only (instead of relating to batches of data); furthermore because the data are transmitted on a per product basis, the amount of time associated with transmission of product data is distributed over many individual transmission events. As a result the process of recording and transmitting presence information occurs far faster than is possible with existing systems; in fact, the inventors have observed a 20% decrease in the time required to scan a given number of product codes placed at given locations within a specified region.

In one arrangement, if the output of the first stage inventory management process indicates that items are expected to be located in the stock room, then the second stage process is performed. The output of the first stage inventory management process can be generated in the form of a search list to be used by an operator to identify the first and second products in the second storage location area (e.g. stock room).

The first stage data input can also be used to trigger an inventory update process in relation to the retail outpost as a whole (rather than just the first or second location areas within the retail outpost): the inventory database can be accessed so as to determine whether a first stage data input was received during a previous inventory management process, and, if the previous first stage data input is identical to the data input just received, a revised item count can be stored in respect of the product. Thus correction of stock levels in respect of the retail outpost occurs on the basis of two or more independent inventory management processes rather than on the basis of a single inventory management process. This is a particularly advantageous aspect of the invention, and has arisen from the observation that retail outposts are complex, and that products might be missing as a result of misplacement rather than the product being out of stock. By waiting for data to be received in relation to a further inventory management process, embodiments of the invention provide a window that allows the "misplaced" products to be returned to their expected position on the shop floor. Updates to the inventory database might be further subject to various conditions, such as the amount of time that has elapsed since the previous inventory management process; second stage data input received in respect of successive inventory management processes; and data received from sales terminals in respect of the product. Essentially, updates to the inventory are subject to various confirmation checks based on input from regions in which items are most likely to be located (stock room, trolley (presence identified via the point of sale), different shelf spaces on the shop floor) and within time frames that have been previously identified as characteristic for the product in question.

Advantageously, and in response to receiving said first stage data input identifying the product, the inventory database can be accessed so as to classify the product with a first, temporary, ordering status. An ordering status might, for example, be "order product", and this classification set when it appears that there are no items of the product on the shop floor. Having been classified as such, various "fail-safe" processes are triggered relating to the product, and the output of these processes are monitored for a further data input indicative of an ordering status different to said first ordering status. These fail-safe checks can include a check for whether items of the products are due for delivery (in which case there is no need to order further items of the product); a check for whether the product has been discontinued; and a check for whether items of the product have been ordered recently. It will be appreciated that in any of these situations, the data that are received causes the ordering status to be changed from "order product" so that items of the product are not actually ordered.

In the event that at least the second predetermined number of items is present in said second storage area, the first inventory control process is performed: for example, in the event that an item of the product is found during the second stage inventory management process (i.e. in the stock room), this will be captured by the monitoring process and the ordering status modified so that items of the product are not actually ordered. In addition, the first inventory control process can trigger a safeguard to ensure that item count held in respect of that product is not reset.

Identification of a lack of items of the product in the stock room is recorded, but the item count in respect of the product is not immediately modified, since resets to the item count in the inventory database for the product are managed by the various checks described above, and not simply on the basis of this output of the second stage inventory management process. In relation to the ordering status this is not modified, which means that, in the absence of a change to the ordering status on the part of any of the other monitoring processes, items of the product will be ordered.

Advantageously the monitoring processes described above can occur in parallel with the second stage inventory management process, which means that products are ordered on the basis of the most up to date information available.

In preferred arrangements, once the first and second stage inventory management processes have been completed, a further stage process is performed, in which a first set of actions to be taken in respect of the first storage location area, and a second set of actions to be taken in respect of the product, are generated. These sets of actions are transmitted, e.g. in the form of a report, to the retail outpost, and serve as recommendations (or in some circumstances explicit instructions) as to the handling of the regions within the shop floor that are vacant of a given product, and as to the handling in respect of the product itself. The sets of actions are generated on the basis of status data stored in the inventory database - in particular taking advantage of the rich information that is available in relation to listing of products, expected delivery timescales, actual order dates, rates of sales of similar products and the like. For example, if it is ascertained that there is no stock of a given product at the retail outpost and that a delivery is due for the next day, the action in respect of the first location area for this product could be "Temporarily Fill Gap corresponding to product P1 with product Pn"; selection of product Pn for the gap will be dependent on factors such as rate of sale of product Pn, which is available from the rates of sales data stored in the inventory database.

In relation to the second type of action, namely that to be taken in respect of the product itself, the set of actions could include a wait period indicative of expected delivery timescales; such information serves to assist the retail outpost in its space management of stock within the second location area.

According to a further aspect of the invention there is provided a handheld device arranged to perform the steps of receiving and transmitting the first and second product data, and one or a cluster of server terminals arranged to receive these transmitted data so as to perform the various inventory management processes described above.

Further features and advantages of the invention will become apparent from the following description of preferred embodiments of the invention, given by way of example only, which is made with reference to the accompanying drawings.

### Brief Description of the Drawings

Figure 1a is a schematic block diagram showing components of an inventory management system according to a first embodiment of the invention;
Figure 1b is a schematic diagram showing at least some fields of a product record stored in the inventory database shown in Figure 1a;
Figure 2 is a schematic diagram flow showing various stages making up an inventory management process according to embodiments of the invention;
Figure 3 is a schematic flow diagram showing steps involved in a first stage of the inventory management process shown in Figure 2; and
Figure 4 is a schematic flow diagram showing steps involved in a second stage of the inventory management process shown in Figure 2.

### Detailed Description of the Invention

As described above, embodiments of the invention are concerned with inventory management. The following description will present the configuration and operation of embodiments of the invention as they relate to performing an inventory management process in relation to a retail outpost.

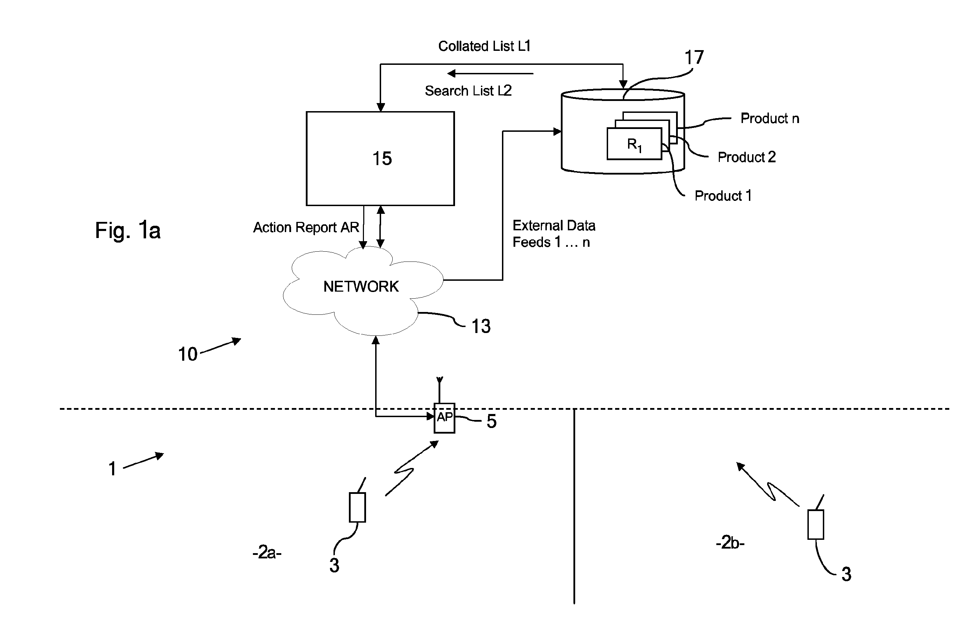

Referring to Figure 1a, a retail outpost 1 is shown as being separated, both logically and physically, from a processing centre 10. The retail outpost 1 includes hand-held scanning devices 3, such as a PDA configured with bar-code scanning capabilities and/or RF-ID scanning capabilities, and an Access Point 5, which is essentially a base station and router arranged respectively to communicate with the mobile scanning device 3 and a network 13 so as to facilitate communication between processing system 15 associated with the processing centre 10 and the mobile scanning device 3.

In embodiments of the invention, the mobile scanning device 3 can be used to record presence information in different areas of the retail outpost: both on the shelves 2a (i.e. customer facing) or in the stock room 2b. In either case the mobile scanning device 3 is used to scan a code corresponding to a product: when the device 3 is used to scan the shelves, the code that is scanned is that located on or around the shelf, which, when scanned, indicates the absence of the goods corresponding to the code; when the device 3 is used in the stock room 2b, the code that is scanned is that located on a given product, which, when scanned, indicates the presence of goods corresponding to the code.

In the case where the mobile scanning device 3 is used to scan codes located on or around shelves, each time a code is scanned the mobile scanning device 3 transmits the scanned data to the processing system 15. Subsequent processing events in relation to the transmitted data will be described in more detail below, but suffice to say that this is one of the principle points of departure from previous systems, in which the scans were batch collected and transmitted to a centralised processing system, incurring the potential loss of data and other associated problems described above.

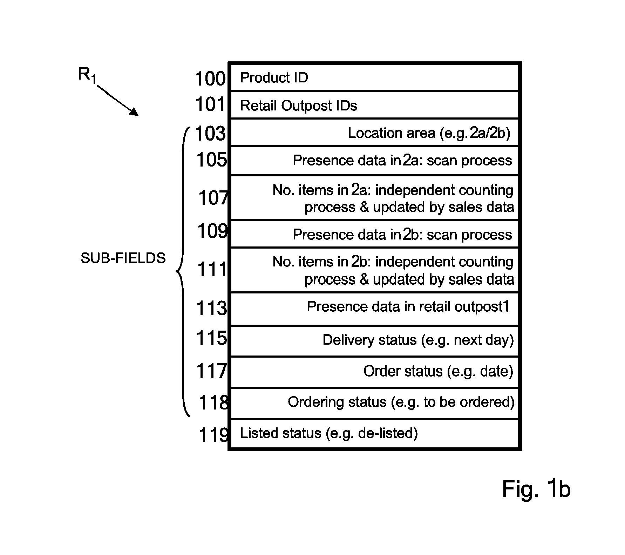

Turning now to the operation of the processing system 15, as shown in Figure 1a, the processing system 15 is connected to an inventory database 17. The inventory database 17 is arranged so as to receive data from various external data sources (such as delivery sources and retail outposts 1) in respect of products that are intended for stock and sale via a given retail outpost. Referring also to Figure 1b, the inventory database 17 comprises a plurality of records Rᵢ, each having a plurality of fields: one field 100 contains a product code identifier, another 101 contains (an) identifier(s) corresponding to the retail outpost(s) 1 in which the product is located whilst another contains availability, or listed, status 119 in relation to the product, which is derivable from various external data sources. In addition the record Rᵢ has several sets of sub-fields 107 ... 118, each set corresponding to a retail outpost at which the product is stocked. Sub-fields 107 and 111 contain data indicative of the number of items of a given product in a given retail outpost 1, classified by area 2a, 2b within the retail outpost - this information having been collected as a part of a completely independent counting process and being updated as products are sold by the retail outpost 1. Sub-fields 105, 109 and 113 contain data indicative of the presence of the product, as per data received from the first and second 201, 203 stage processes, while sub-fields 113, 115, 117 contain data relating to the ordering and delivery status of the product for the particular retail outpost 1.

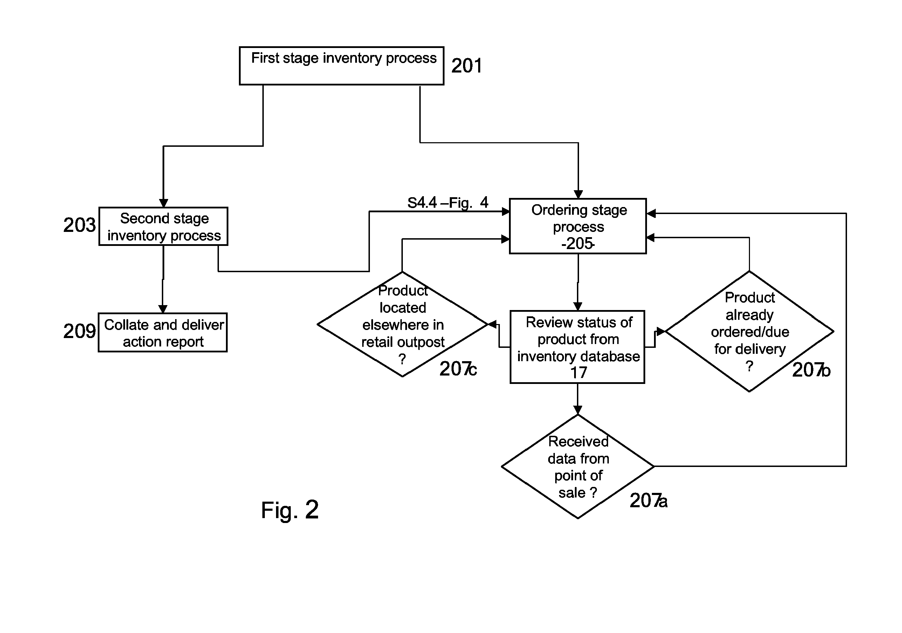

The processing system 15 operates a inventory management process according to an embodiment of the invention; in overview, and referring to Figure 2, the inventory management process essentially comprises various stages - a first stage inventory management process 201 relating to first area 2a of the retail outpost (the customer-facing area) and a second stage inventory management process 203 relating to a second area 2b (the stock room). The output of the first stage, which is based on presence data received in relation to a product in the customer-facing area 2a, is an output that indicates whether or not items corresponding to the product are expected to be present in the stock room 2b; in addition the first stage can trigger an ordering process stage 205, in which the processing system 15 collates a list L1 of product data for transmission to suppliers of the product.

The second stage 203 involves identifying whether or not such items are present in the second storage area 2b, and the output of the second stage can be used to modify the collated list L1 (e.g. in the event that items are found in the second storage area).

Several other events 207a ... 207c, having an effect on the ordering process stage 205, can occur in parallel with the second stage process 203: if, for example, the processing system 15 receives data indicative of sale of an item of the product for which the ordering field 118 has been set, and assuming the sale data to be received within specified temporal bounds (dependent on the elapsed time since receipt of data from the first stage 201), the processing system 15 modifies the ordering field 118 associated with this product (process 207a); and/or if, on the basis of status data stored in the inventory database 17, the processing system 15 determines that items of the product are due for delivery/have recently been ordered, the processing system 15 modifies the ordering field 118 associated with this product (process 207b); and/or if, and again on the basis of status data stored in the inventory database 17, the processing system 15 determines that items of the product are located at a different location within the first location area 2a, the processing system 15 modifies the ordering field 118 associated with this product (process 207c); other such checks are envisaged, which essentially have the effect of modifying the content of the collated list L1 that is transmitted to the various suppliers for the purpose of ordering products for the retail outpost 1. Once the list L1 has been transmitted, the status sub-fields 117 in respect of those products appearing on the list L1 are updated. It is to be noted that a list might not actually exist until time of transmission to respective suppliers: instead, and because a record in respect of each product is held in the inventory database 17, the products can be tagged "for order" by means of an ordering field 118. At the time of transmission, the processing system 15 can query the database 17 in respect of those products having specified data in the ordering field, thereby creating the collated list L1.

It will therefore be appreciated that the ordering process stage 205 operates in real time to ensure that the retail outpost 1 is adequately, and not over, stocked. This balance is achieved by triggering the ordering process stage 205 from the first stage 203, and then controlling the ordering process on the basis of several 'fail safes', in the form of checks 207a - 207c that allow the system to stop ordering products if items of the product are either found in the warehouse 2b, elsewhere within the shop floor area 2a, or indeed if they are due to arrive at the retail outpost 1 imminently. Thus this ordering process 205 can function so as to override the standard, somewhat isolated, product ordering system so as to trigger delivery of a product even if, on the basis of the regular stock calculations, it would appear that there is an adequate amount of stock available in the retail outpost 1.

Once the second stage 203 has been completed, the processing system 15 is triggered to generate 209 a report specifying actions to be taken on the part of the retail outpost 1 in respect of those products for which no items have been found. As will be described in more detail below, the report specifies actions to be taken in relation to the first location area 2a - more specifically gaps on the shelves - as well as in relation to the products that are supposed to be present on the shelves.

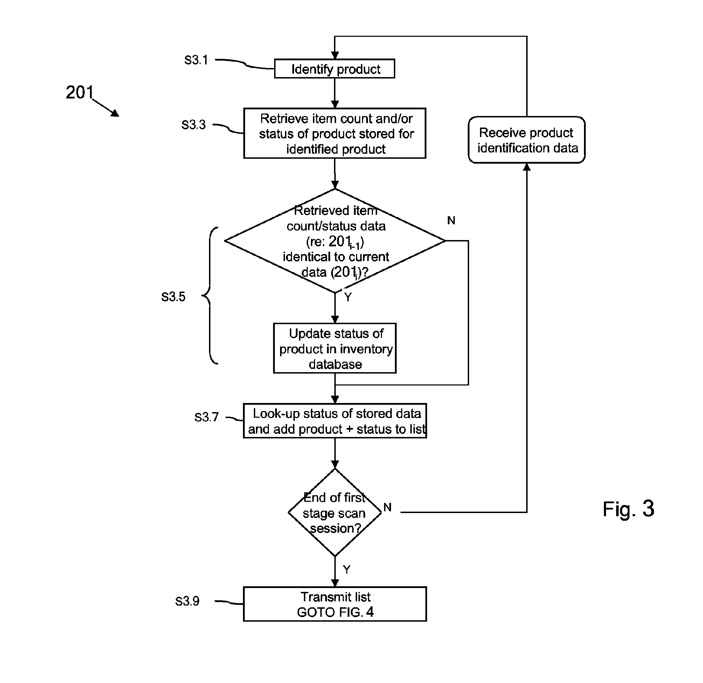

The first and second stages 201, 203 will now be described in more detail, starting with the first stage 201 and with reference to Figure 3: in response to receipt of presence data indicating that the shelf area 2a corresponding to a product is empty, and on the basis of the transmitted product code, the processing system 15 identifies (step S3.1) the product from the transmitted data, and queries the inventory database 17 in order to retrieve (step S3.3) the item number and/or status of the product identified at step S3.1. Step S3.3 is essentially a look-up to determine an expected number of products in the second storage area 2b (the stock room); if the expected number is zero (as determined from inspection of sub-field 111), the database 17 can retrieve status data from any one or some of fields 115, 117, 119, which can be used to provide a reason for the absence of a given product. The product identity and retrieved status information are then added to a search list L2 that will be transmitted to the retail outpost 1 once the first stage has been completed ((step S3.9), as described in more detail below).

The data received during the first stage 201 can also be used to validate (step S3.5) data received during a previous inventory management process, and subsequently to update stock levels stored within the inventory database 17. The rationale behind this validation process is as follows: in relation to a given product, and on the basis of data stored in product record sub-fields 105 and 109, the processing system 15 only modifies the sub-field 113 in respect of the given product if the scan output of a previous and the current first stage 201ᵢ₋₁, 201ᵢ is identical - i.e. if no items of a given product are determined to be present in the customer-facing location area 2a on two successive scan events. This represents a point of departure from known systems: instead of updating the outpost-status of a given product immediately, embodiments of the invention update the outpost-status on the basis of successively received presence data, and only in the event that the presence data received in respect of the later first stage 201ᵢ validates the presence data stored in respect of the earlier first stage 201ᵢ₋₁. Typically such a situation only arises when this information conflicts with the data stored in sub-field 111, and is then used to reset the stock count in respect of the product for this retail outpost 1. This is an important aspect of the invention, since, if it appears that there is a sufficient amount of a given product, the forecasting and ordering of that product will be handled differently to how it is handled in the event that there is no product; thus by tracking and correcting the amount of a given product, embodiments of the invention provide an improved method of stock management. Preferably, resetting of the stock count is additionally dependent on other conditions being satisfied, e.g. that the previous first stage output 201ᵢ₋₁ is separated from the current first stage output 201ᵢ by a minimum time period, which is dependent on characteristics of the product in question; and/or that successive second stage processes indicate that there are no items of the product (i.e. confirming that no items of the product have been found during successive checks of the stock room); and/or no sales of the product have been made between the receipt of the previous and current first stage outputs 201ᵢ₋₁, 201ᵢ.

This process is repeated for all such shelf regions in the first location 2a that are empty.

Once the operator of mobile device 3 indicates that a first stage 201 scan session is complete, the search list L2 is transmitted to the retail outpost 1 (step S3.9), and the second stage 203 of the inventory management process begins. The search list L2 can be transmitted to the mobile device 3 or to a computing system local to the outpost 1 - via the access point 5. This is another point of departure from known systems: conventionally, the mobile device 3 retains a list of all of the products for which the shelves are empty, and the stock room has to be manually searched in relation to each and every item on the list. In the event that an item corresponding to a given product code is found, the mobile device 3 is used to enter data indicative of the number of such items that have been identified. It will be appreciated that if, in fact, there are no items in the stock room, a significant amount of time can be wasted in searching for these items. In embodiments of the invention, however, because the status data are transmitted together with the product data, the designated person has further information - which serves to highlight those products for which items are expected to be located in the second location area 2b.

Returning to the functionality of the mobile scanning device 3, once the search list L2 has been received, the device 3 is used to record the presence of an item corresponding to a given product code on the list L2 - within the second storage area 2b (which might be the stock room or some other repository for holding stock associated with the retail outpost 1). Even if the designated person can find more than one item corresponding to a product code on the list, the designated person only needs to record the presence of that item; in other words there is no need to search for each and every item corresponding to a product code.

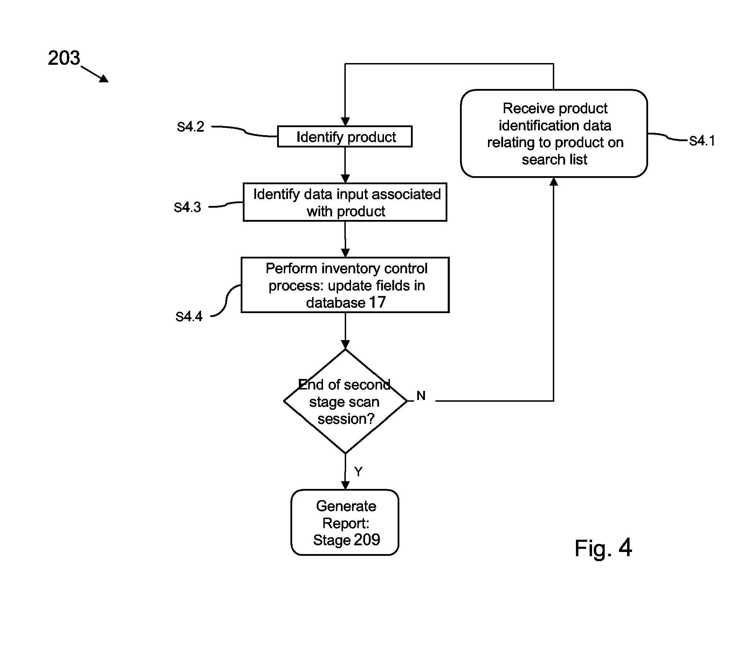

Turning to Figure 4, the mobile scanning device 3 is equipped with a bespoke user interface and corresponding functionality that enables the designated person to record the presence of an item corresponding to a product code on the list (step S4.1). In one arrangement, and in relation to a given product on the search list L2 for which the status is "In Store", the user interface presents a plurality of selectable menu options including "Remove product". Selection of this menu option causes the mobile scanning device 3 to transmit data, to the inventory database 17, indicative of items corresponding to that product code being present in the stock room 2b. When received, the product and presence data are identified from the received data (steps S4.2, S4.3). In relation to those products that were accompanied by "In Store" status on the search list L2, if the presence data indicate that at least one item has been found in the stock room 2b then the inventory control process indicated at step S4.4 is a data validation, or confirmation, event, which causes the ordering sub-field 118 corresponding to that product to be updated, effectively removing that product from the ordering list L1.

In preferred arrangements of the inventory management process the designated person is only required to input data via the user interface (and indeed the inventory database 17 is only updated) in the event that items are located within the stock room area 2b of the retail outpost 1. However, it will be appreciated that the user interface could include a selectable option of "None", which, when selected, causes the mobile scanning device 3 to transmit status data to the inventory database 17 indicative of items corresponding to that product code being "Not in Store". In either possible implementations, in the event that the processing system 15 determines there to be no items present in the second storage area (stock room 2b), the inventory control process of step S4.4 involves updating the status sub-field 109 of the given product to indicate that the item count in the second storage area 2b is zero.

Turning back to Figure 2, once the second scanning stage 203 has been completed, the processing system 15 is triggered to run 209 an action report AR detailing actions to be taken in respect of the products for which data were received during the first scanning stage 201 - in other words those for which there are gaps in the customer facing storage location 2a. The action report AR contains two types of actions: a first type relating to the first location area 2a (i.e. the gaps) and a second type relating to the products themselves.

The first type of action is essentially a recommendation, based on information collected and derived during the various stages 201, 203, 205 of the inventory management process, as to how the absence of a given product should be handled in relation to the first location area 2a - i.e. the shelf regions. In order to generate such recommendations, the processing system 15 has access to a set of rules that depend upon e.g. delivery status, order status, and listed status information as defined in fields 115, 117, 119 and 118. If, for example, the processing system 15 identifies that for product P1 there is no stock at the retail outpost 1 and that a delivery is due for the next day (e.g. from fields 105, 109 113 & 115), the action in respect of the first location region 2a corresponding to product P1 could be "Temporarily Fill Gap corresponding to product P1 with product Pn". It will be appreciated that selection of product Pn for the gap will be dependent on factors such as rate of sale of product Pn, since ideally this region of the first location area 2a should be empty again at the time of delivery of the next batch of product P1. Such rate of sale information is typically available in the form of a rate of sale parameter that is derivable by the processing system 15 based on historical sales data. Taking another example scenario, in which a given product P2 is identified as being discontinued (e.g. from field 119); the recommendation specified in the report R could be "Permanently Fill Gap corresponding to product P2 with product Pn", where Pn could be, for example, a newly introduced product, and/or one that has similar customer-facing attributes to product P2.

Turning now to the second type of action, namely that to be taken in respect of the product P1 itself, the report AR could detail actions such as "wait X days" for delivery of product P1, where X is derivable from status sub-field 115 corresponding to product P1. This information serves to assist the retail outpost 1 in its space management of stock within the second location area 2b.

### Additional Details and Alternatives

In the above embodiment the search list L2, which is generated for the purposes of searching through the second location area 2b for the presence of items of products, lists all of the products scanned during the first stage 201. However, in an alternative arrangement a filtered version of the search list L2 could be generated for the purposes of product identification, this list comprising only those products that, according to the data in sub-fields 111 and 113, are expected to be located in the second location area 2b; the full search list L2 could then be transmitted to the manager of the retail outpost 1.

It will be appreciated that based on data stored in the fields of the product records Rᵢ, the processing system 15 can carry out various tasks such as monitoring for delivery of a product (which will be identifiable by monitoring for the absence of product data in relation to the first location area 2a, since this is indicative of product being present within the first location area 2a). For example, consider the scenario in which an order for product P1 has been placed, and for which the delivery status 115 indicates delivery is due for 01 December 2005. If, on 01 December 2005, data relating to product P1 are still being received during the first stage 201 scan, and upon a review of the listed status 119 for that product P1 there does not appear to be a problem with availability of the product, the processing system 15 can be configured to immediately query the delivery of that product.

Examples of the content of sub-fields 115, 117 are as follows: delivery awaited; delivery due in dd/mm/yy; short delivered (not all of the stock ordered was delivered); delivery refused (i.e. not available at Depot but was orderable).

Examples of the content of sub-fields 105, 109 are as follows: found in store (second stage 203 completed for product that was originally scanned in during the first stage 201); in store (i.e. have at least 1/2 case of book-stock).

Examples of the content of listed status are as follows: not available from Depot (advance notification received that the product is not available to be ordered); not available (no supplier authority set-up for the product to be ordered); not stocked (i.e. de-listed).

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of conducting inventory management for products held in at least two different storage areas, including first and second storage areas (2a, 2b), comprising:
maintaining an inventory database (17) for holding product records (R₁...Rₙ), said product records including an item count for each of a plurality of different products;
conducting a first stage inventory management process (201) relating to said first area (2a) and a second stage inventory management process (203) relating to said second area (2b),
in said first stage (201):
receiving a first stage data input identifying a first product and indicating that a number of items of said first product held in said first storage area is at or below a first predetermined number;
in response to receiving said first stage data input identifying (S3.1) said first product, generating a data output (S3.7) for use in said second stage (203), said first stage data output including identifying data for said first product; and
in said second stage:
receiving a second stage data input (S4.1) relating to said first stage data output;
determining from said second stage data input (S4.3) whether at least a second predetermined number of items of said first product is present in said second storage area;
conducting a first inventory control process (S4.4) in dependence on whether at least said second predetermined number of items of said first product is present in said second storage area.

2. A method according to claim 1, comprising:
if at least the second predetermined number of items is present in said second storage area, conducting said first inventory control process;
if less than the second predetermined number of items of said first product is present in said second storage area, conducting a second inventory control process.

3. A method according to claim 1 or claim 2, wherein said first inventory control process comprises performing a first inventory order control process.

4. A method according to any one of the preceding claims, wherein said second inventory control process comprises performing a second inventory order control process.

5. A method according to any one of claim 1 to claim 3, wherein said first stage (201) comprises:
receiving a further first stage data input identifying a second product and indicating that a number of items of said second product held in said first storage area is at or below a predetermined threshold;
in response to receiving said further first stage data input identifying said second product, generating said second stage input in the form of a set of identifying data including identifying data for said first product and identifying data for said second product.

6. A method according to any one of the preceding claims, wherein said first predetermined number is zero.

7. A method according to any one of the preceding claims, wherein said second predetermined number is one.

8. A method according to any one of claim 5 to claim 7, wherein said second stage data input is generated (S3.7) in the form of a search list (L2) to be used by an operator to identify said first and second products in said second stage management process.

9. A method according to any one of the preceding claims, including, in said first stage (201):
in response to receiving said first stage data input identifying said first product, accessing said inventory database (17) in respect of the first product;
generating said first stage data output in dependence on whether a said predetermined number of items of said first product are indicated by an item count held for said first product in relation to said second area.

10. A method according to claim 9 dependent on claim 8, comprising arranging said first product identifying data on said search list (L2) selectively in dependence on whether said predetermined number of items of said first product is indicated by an item count held for said first product in relation to said second area.

11. A method according to any one of the preceding claims, in which the product records stored in the inventory database (17) include status data for said products, the method including, in said first stage:
in response to receiving said first stage data input identifying said first product, accessing said inventory database in respect of the first product;
generating said first stage data output in dependence on said status data held for said first product.

12. A method according to claim 11 dependent on claim 8, comprising arranging said first product identifying data on said search list (L2) selectively in dependence on said status data.

13. A method according to any one of the preceding claims, including transmitting said first stage data output to a remote terminal (3).

14. A method according to claim 13, wherein the remote terminal (3) is capable of performing scanning of first and second data so as to generate said first and second stage data input.

15. A method according to any one of the preceding claims, comprising receiving and processing said first stage data input identifying a first product and indicating that a number of items of said first product held in said first storage area is at or below a first predetermined number as an independent data input which relates only to said first product.

16. A method according to any one of the preceding claims, including, for each said product:
in response to receiving said first stage data input identifying the product, accessing (205) the inventory database (17) so as to classify the product with a first ordering status;
monitoring (207a, 207b, 207c) for a further data input indicative of an ordering status different to said first ordering status; and
accessing the inventory database so as to modify the classification to an ordering status different to said first ordering status in dependence on said further data input.

17. A method according to claim 16, in which said monitoring (205a, 205b, 205c) for the further data input occurs concurrently with said second stage inventory management process (203).

18. A method according to claim 16 or claim 17, further comprising creating an order (L1) for said products in dependence on said ordering status.

19. A method according to any one of the preceding claims, including, for each product:
in response to receiving said first stage data input identifying said first product, accessing the inventory database (17) so as to determine whether a first stage data input was received during a previous inventory management process (S3.5ᵢ₋₁).

20. A method according to claim 19, in which, in the event that the previous first stage data input is identical to said received first stage data input, the method includes storing a revised item count in said inventory database (17) in respect of said product.

21. A method according to any one of the preceding claims, in which the method includes a further stage inventory management process (209) comprising:
for each product identified by said first stage data input, generating a first set of actions to be taken in respect of the first storage location area and a second set of actions to be taken in respect of the product.

22. A method according to claim to claim 21 and claim 11, including, for each product identified by said first stage data input, modifying selected ones of said status data in dependence on said first stage data input and said second stage data input, and generating the first and second sets of actions in dependence on said status data stored in respect of said product.

23. A method according to claim 22, in which said first and second sets of actions are generated in the form of a report (AR) and the method includes transmitting said report to a remote terminal.
